# EUROPEAN PATENT APPLICATION

(11) **EP 4 730 217 A1**
(43) Date of publication of application: **22.04.2026**
(21) Application number: 23941650.6
(22) Date of filing: 16.06.2023
(51) Int. Cl.: G06N 20/00, G06N 5/045

(54) **ESTIMATION PROGRAM, INFORMATION PROCESSING DEVICE, AND ESTIMATION METHOD**

(71) Applicant: FUJITSU LIMITED, Kawasaki-shi, Kanagawa 211-8588 (JP)
(72) Inventor: KATO, Takashi, Kawasaki-shi, Kanagawa 211-8588 (JP); SUZUKI, Hirofumi, Kawasaki-shi, Kanagawa 211-8588 (JP); HIGUCHI, Hiroyuki, Kawasaki-shi, Kanagawa 211-8588 (JP)
(74) Representative: Hoffmann Eitle
(86) International application number: PCT/JP2023/022486
(87) International publication number: WO 2024/257351

(57) **Abstract**

An estimation program causing a computer to execute a process includes specifying, from a prediction result obtained from a prediction model that predicts a replacement part, two parts with an occurrence rate of a prediction error, which indicates that another of the parts is determined to be the prediction result in a case where one of the parts is a correct answer, exceeding a predetermined value, acquiring both of input data that is connected to the specified two parts and diagnostic data that indicates diagnostic content obtained by a worker and that corresponds to the input data, and estimating, by using the diagnostic data, regarding one or more feature values that are additional candidates for an input to the input data and that are specified based on an association relationship between the feature values and the diagnostic content that is included in the diagnostic data, a degree of improvement of prediction accuracy to be indicated in a case where the feature values are added to teacher data included in the prediction model.

## Description

### Technical Field

The present invention relates to an estimation program, an information processing apparatus, and an estimation method.

### Background Art

In a manufacturing process for products, a replacement part is predicted by using machine learning. For example, a technology for predicting, in a manufacturing process of a measuring instrument, a defective part included in the measuring instrument from result data that has been obtained in an environment test performed by using a defective part prediction model has been disclosed (for example, see Patent Literature 1). With such machine learning, in some cases, it is not possible to explain the basis for the prediction.

Furthermore, in recent years, a prediction model using AI has been developed. Such a prediction model is referred to as Explainable AI (XAI), and is a technology for enabling an explanation of the basis for a prediction that is predicted by AI. XAI is able to explain the extent to which each feature value contributes to the prediction results. Furthermore, in the manufacturing process of a product, it is possible to predict the replacement part by using XAI.

### Citation List

### Patent Literature

Patent Literature 1: Japanese Laid-open Patent Publication No. 2022-22499

### Summary of invention

### Technical Problem

However, in a case where the replacement part is predicted by using XAI or machine learning, there is a problem in that it is difficult to choose a feature value that is needed to improve the accuracy of the prediction. Choosing a feature value that is needed to maintain the prediction with high accuracy is impossible to avoid. In particular, in XAI, the basis for the prediction is explained on the basis of the feature value that is to be input, so that choosing the feature value that is easy to use for the explanation of the basis for the prediction is impossible to avoid. However, it is costly to convert to a digital format as the feature value without discrimination.

Accordingly, it is an object in one aspect of an embodiment of the present invention to choose a feature value that is needed to improve the accuracy of a prediction in a case where a replacement part is predicted.

### Solution to Problem

According to an aspect of an embodiment, an estimation program causing a computer to execute a process includes specifying, from a prediction result obtained from a prediction model that predicts a replacement part, two parts with an occurrence rate of a prediction error, which indicates that another of the parts is determined to be the prediction result in a case where one of the parts is a correct answer, exceeding a predetermined value, acquiring both of input data that is connected to the specified two parts and diagnostic data that indicates diagnostic content obtained by a worker and that corresponds to the input data, and estimating, by using the diagnostic data, regarding one or more feature values that are additional candidates for an input to the input data and that are specified based on an association relationship between the feature values and the diagnostic content that is included in the diagnostic data, a degree of improvement of prediction accuracy to be indicated in a case where the feature values are added to teacher data included in the prediction model.

### Advantageous Effects of Invention

According to one aspect of an embodiment, it is possible to choose a feature value that is needed to improve the accuracy of a prediction in a case where a replacement part is predicted.

### Brief Description of Drawings

FIG. 1 is a diagram illustrating one example of a functional configuration of an information processing apparatus according to an embodiment.
FIG. 2 is a diagram illustrating one example of a functional configuration of a learning unit according to the embodiment.
FIG. 3 is a diagram illustrating one example of BOM data according to the embodiment.
FIG. 4 is a diagram illustrating one example of defective phenomenon data according to the embodiment.
FIG. 5 is a diagram illustrating one example of repair handling data according to the embodiment.
FIG. 6 is a diagram illustrating one example of a functional configuration of a prediction unit according to the embodiment.
FIG. 7 is a diagram illustrating one example of prediction result data according to the embodiment.
FIG. 8 is a diagram illustrating one example of a functional configuration of an estimation unit according to the embodiment.
FIG. 9 is a diagram illustrating one example of diagnostic data according to the embodiment.
FIG. 10 is a diagram illustrating one example of linked data according to the embodiment.
FIG. 11 is a diagram illustrating one example of prediction error evaluation according to the embodiment.
FIG. 12 is a diagram illustrating one example of additional feature value search according to the embodiment.
FIG. 13 is a diagram illustrating one example of calculation of a degree of accuracy improvement according to the embodiment.
FIG. 14 is a diagram for explaining a a degree of priority of a selection of a feature value.
FIG. 15 is a diagram illustrating one example of a flowchart of the flow of a prediction error evaluation process according to the embodiment.
FIG. 16 is a diagram illustrating one example of a flowchart of the flow of an additional feature value search process according to the embodiment.
FIG. 17 is a diagram illustrating a modification of an additional feature value search according to the embodiment.
FIG. 18 is a diagram for explaining an example of a hardware configuration.

### Description of Embodiments

Hereinafter, preferred embodiments of an estimation program, an information processing apparatus, and an estimation method disclosed in the present application will be described in detail below with reference to the accompanying drawings. Moreover, the present invention is not limited by the embodiments.

### Embodiment

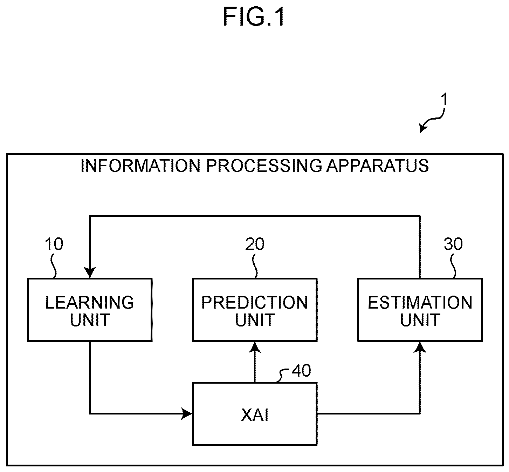

FIG. 1 is a diagram illustrating one example of a functional configuration of an information processing apparatus according to an embodiment. As illustrated in FIG. 1, an information processing apparatus 1 includes a learning unit 10, a prediction unit 20, an estimation unit 30, and XAI 40.

The XAI 40 is an AI model that uses Explainable AI (XAI). In other words, the XAI 40 is explainable AI that enables an explanation of the basis for a prediction made by AI. Moreover, as one example of the XAI 40, a random forest or wide learning may be included. In the embodiment, a case in which the XAI 40 is used as wide learning will be described as an example, but the example is not limited to this example.

The learning unit 10 trains the XAI 40. For example, the learning unit 10 trains, in a manufacturing process of a product, the XAI 40 (AI model) by using, as teacher data, a part group that constitutes the product, a defective phenomenon, and a replacement part that has been actually replaced. As one example, the learning unit 10 trains a rule for predicting the replacement part by using, as the teacher data, the part group that constitutes the product, the defective phenomenon, and the replacement part that has been actually replaced on the basis of a rule based model that is indicated by the XAI 40. In the rule, a combination of two feature values is included, and also, information indicating which class (for example, a CPU, a memory, etc.) is included. Each of the individual parts that constitute the product, the defective phenomenon, and the replacement part is a feature value. Moreover, the learning unit 10 in detail will be described later.

The prediction unit 20 predicts the replacement part by using the XAI 40. For example, the prediction unit 20 inputs the part group that constitutes the product and that has been detected to be abnormal and the defective phenomenon that indicates the abnormality to the XAI 40, and then outputs a replacement part from the XAI 40. Specifically, the prediction unit 20 inputs both of the part group that constitutes the product and that has been detected to be abnormal and the defective phenomenon that indicates the abnormality to the rule based model that is indicated by the XAI 40, and then predicts the replacement part conforming to the rule. Then, the prediction unit 20 accumulates the prediction results. Moreover, the prediction unit 20 in detail will be described later.

The estimation unit 30 estimates the feature value that is to be added to the teacher data. For example, the estimation unit 30 utilizes both of the rule that has been trained by the XAI 40 and the prediction results, and evaluates a prediction error for each class (for example, a CPU, a memory, etc.). Then, the estimation unit 30 estimates the feature value to be added by checking both of the class that is difficult to predict and that has been obtained from the evaluation of the prediction error and the rule at that time against diagnostic data. The diagnostic data mentioned here indicates information that is obtained by digitizing the diagnostic content of a diagnosis conducted by a worker at the site in order to determine the replacement part. As one example, an example of the diagnostic data includes information indicating that "X" has been checked in order to determine whether the replacement part is "A" or "B". Moreover, the estimation unit 30 in detail will be described later.

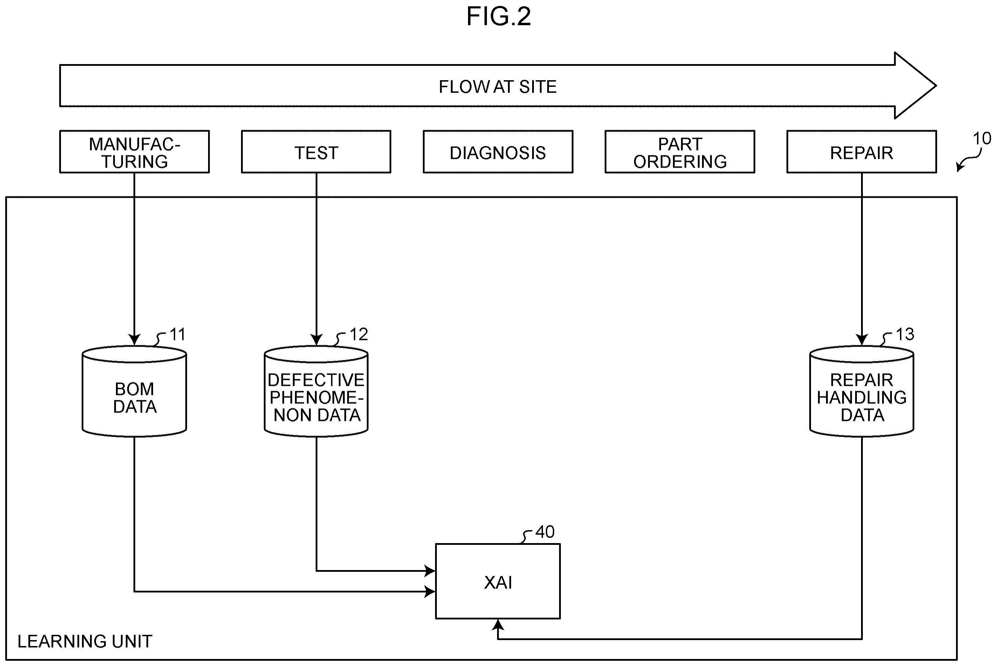

In the following, a functional configuration of the learning unit 10 according to the embodiment will be described with reference to FIG. 2. FIG. 2 is a diagram illustrating one example of the functional configuration of the learning unit according to the embodiment. Moreover, the functional configuration illustrated in FIG. 2 is indicated together with the flow of a manufacturing process of the product performed at the site. As illustrated in FIG. 2, the learning unit 10 includes Bill Of Materials (BOM) data 11, defective phenomenon data 12, repair handling data 13, and the XAI 40. The learning unit 10 trains the XAI 40 by using the BOM data 11, the defective phenomenon data 12, and the repair handling data 13. As one example, the learning unit 10 trains the rule for predicting the replacement part, by using the BOM data 11, the defective phenomenon data 12, and the repair handling data 13, on the basis of the rule based model that is indicated by the XAI 40.

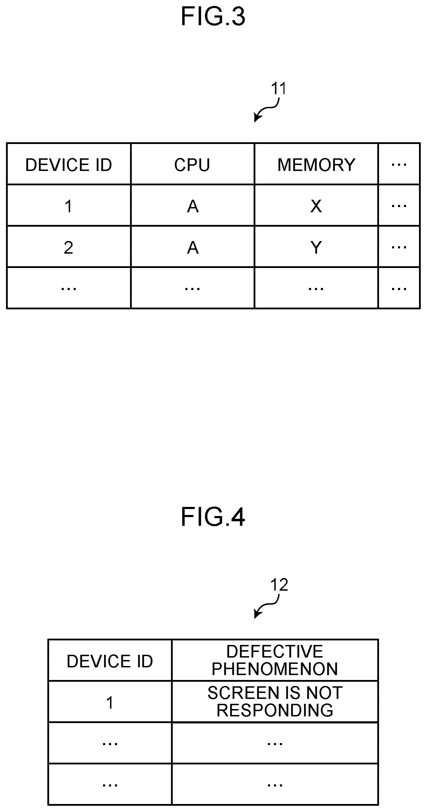

The BOM data 11 is information that indicates, for each product, the part group that constitutes each of the products. A Personal Computer (PC) is included as one example of the product. The BOM data 11 is stored in a manufacturing phase included in the flow of the processes that is being performed at the site. Here, one example of the BOM data 11 will be described with reference to FIG. 3. FIG. 3 is a diagram illustrating one example of the BOM data according to the embodiment. The BOM data 11 stores therein a device id (identification), a CPU, a memory, ... , and the like in an associated manner. The device id is an identifier for uniquely identifying the device to be manufactured. The CPU, the memory, ... , and the like are information on each of the parts constituting the device to be manufactured. Each of the types is stored in the information on each of the parts. For example, in the information on the CPU, for example, distinctions among Intel, AMD, and Arm may be stored, or distinctions among CPU architectures may be stored. Moreover, the information on each of the parts is not limited to the type, but may be a detection value that is detected in the manufacturing phase. Each of the pieces of information on the respective parts is used as a feature value.

As one example, in a case where the device id is "1", "A" (for example, AMD) is stored as the CPU, "X" (for example, DDR4) is stored as the memory, ... , and the like.

A description will be given here by referring back to FIG. 2. The defective phenomenon data 12 is information in which the product is associated with the defective phenomenon. The defective phenomenon data 12 is stored in a test phase included in the flow of the processes performed at the site. Here, one example of the defective phenomenon data 12 will be described with reference to FIG. 4. FIG. 4 is a diagram illustrating one example of the defective phenomenon data according to the embodiment. As illustrated in FIG. 4, the defective phenomenon data 12 stores therein the device id and the defective phenomenon in an associated manner. The device id is an identifier for uniquely identifying the device to be manufactured, and is associated with the device id of the BOM data 11. The defective phenomenon is a phenomenon that indicates a malfunction.

As one example, in a case where the device id is "1", information indicating that a "screen is not responding" is stored as the defective phenomenon.

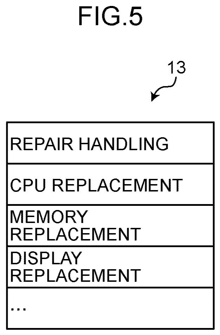

A description will be given here by referring back to FIG. 2. The repair handling data 13 is data that stores therein the replacement part that corresponds to a result of the actual repair handling. The repair handling data 13 is stored in a repair phase included in the flow of the processes performed at the site. Here, one example of the repair handling data 13 will be described with reference to FIG. 5. FIG. 5 is a diagram illustrating one example of the repair handling data according to the embodiment. As illustrated in FIG. 5, the repair handling data 13 stores therein the replacement part that corresponds to a result of the actual repair handling.

As one example, a "CPU replacement" is stored as the repair handling. Furthermore, a "memory replacement" is stored as the repair handling.

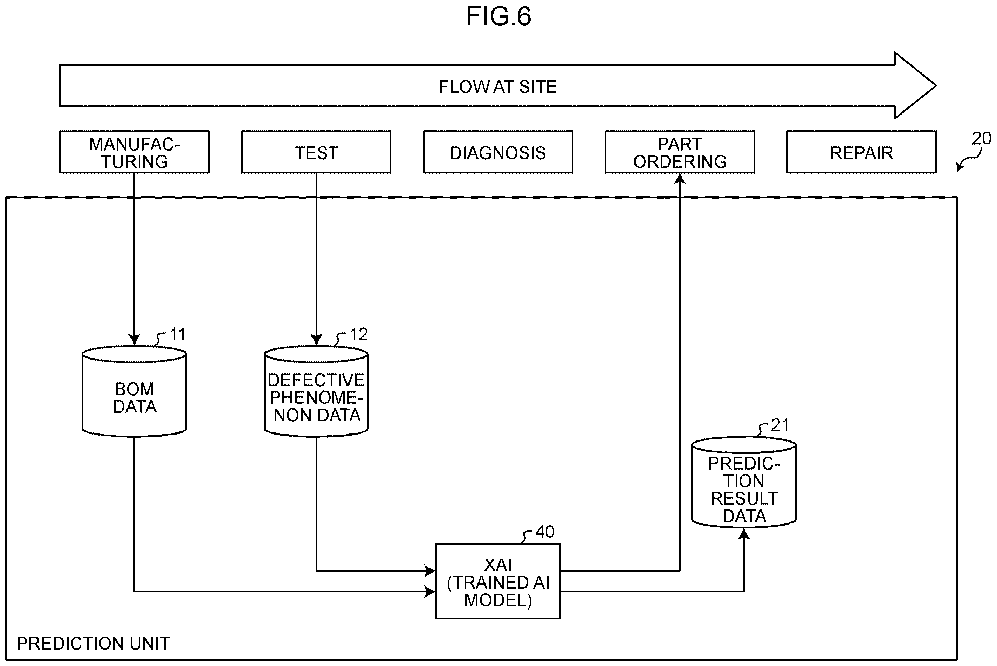

In the following, a functional configuration of the prediction unit 20 according to the embodiment will be described with reference to FIG. 6. FIG. 6 is a diagram illustrating one example of the functional configuration of the prediction unit according to the embodiment. Moreover, the functional configuration illustrated in FIG. 6 is indicated together with the flow of a manufacturing process of the product performed at the site. As illustrated in FIG. 6, the prediction unit 20 includes the BOM data 11, the defective phenomenon data 12, prediction result data 21, and the XAI 40. The XAI 40 is a trained AI model that has been trained by the learning unit 10.

The prediction unit 20 predicts the replacement part corresponding to the prediction target by inputting both of the BOM data 11 and the defective phenomenon data 12 related to the prediction target to the XAI 40 that is the trained AI model. As one example, the prediction unit 20 predicts the replacement part conforming to the rule by inputting the BOM data 11 and the defective phenomenon data 12 related to the prediction target to the rule based model that is indicated by the trained XAI 40. Then, the prediction unit 20 places an order of the predicted replacement part. In other words, the prediction unit 20 outputs a purchase order request of the predicted replacement part to a part ordering phase included in the flow of the processes performed at the site.

In addition, the prediction unit 20 stores the prediction results in the prediction result data 21. For example, the prediction unit 20 adds, to the prediction result data 21, a record in which the BOM data 11 and the defective phenomenon data 12 that are the prediction targets and the replacement part that indicates the prediction result are associated with each other. After that, the prediction unit 20 may update the replacement part that indicates a correct answer to the subject record.

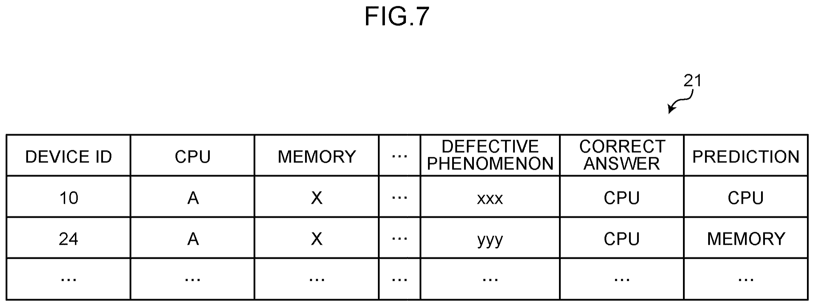

A description will be given here by referring back to FIG. 6. The prediction result data 21 is data that stores therein the prediction results. Here, one example of the prediction result data 21 will be described with reference to FIG. 7. FIG. 7 is a diagram illustrating one example of the prediction result data according to the embodiment. As illustrated in FIG. 7, the prediction result data 21 stores therein the device id, the CPU, the memory, ... , the defective phenomenon, the correct answer, and the prediction in an associated manner. The device id is a device id of the prediction target, and corresponds to the device id that is included in each of the BOM data 11 and the defective phenomenon data 12. The CPU, the memory, ... , or the like is the BOM data 11 corresponding to the prediction target and is the information on the device associated with the device id stored in the BOM data 11. The defective phenomenon is the defective phenomenon data 12 on the prediction target, and is the information on the defective phenomenon associated with the device id stored in the defective phenomenon data 12. The correct answer indicates the replacement part indicated by the correct answer. The prediction indicates the replacement part that has been predicted by the XAI 40.

As one example, in a case where the device id is "10", "A" is stored as the CPU, "X" is stored as the memory, ... , "xxx" is stored as the defective phenomenon, a "CPU" is stored as the correct answer, and the "CPU" is stored as the prediction. In a case where the device id is "24", "A" is stored as the CPU, "X" is stored as the memory, ... , "yyy" is stored as the defective phenomenon, a "CPU" is stored as the correct answer, and a "memory" is stored as the prediction.

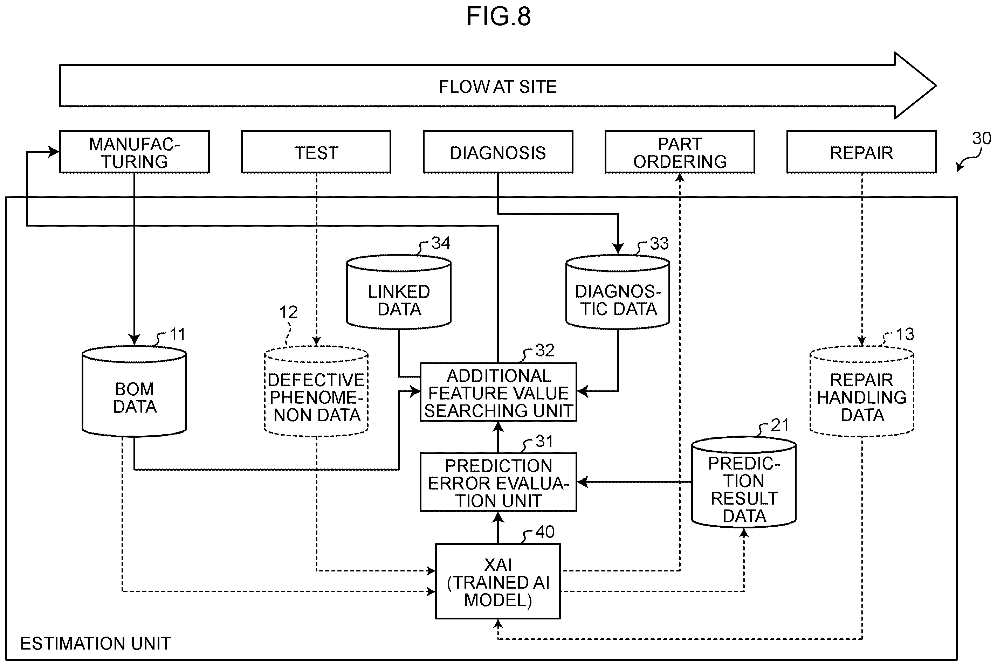

In the following, a functional configuration of the estimation unit 30 according to the embodiment will be described with reference to FIG. 8. FIG. 8 is a diagram illustrating one example of a functional configuration of the estimation unit according to the embodiment. Moreover, the functional configuration illustrated in FIG. 8 is indicated together with the flow of a manufacturing process of the product performed at the site. As illustrated in FIG. 8, the estimation unit 30 includes the BOM data 11, the prediction result data 21, a prediction error evaluation unit 31, an additional feature value searching unit 32, a diagnostic data 33, a linked data 34, and the XAI 40. Moreover, the prediction error evaluation unit 31 is one example of a specifying unit. The additional feature value searching unit 32 is one example of an acquisition unit and an estimation unit. The XAI 40 is one example of a prediction model. The BOM data 11 is one example of input data.

The XAI 40 is the trained AI model that has been trained by the learning unit 10. The BOM data 11 is the information that is the same as that of the BOM data 11 that is used by the learning unit 10. The prediction result data 21 is the information that has been generated by the prediction unit 20.

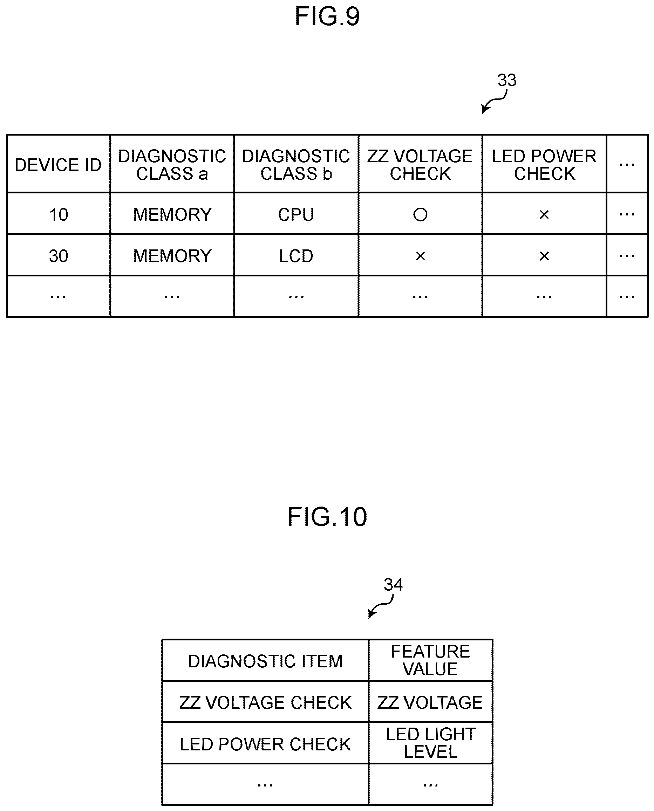

The diagnostic data 33 indicates information that is obtained by digitizing the diagnostic content of a diagnosis conducted by a worker at the site in order to determine the replacement part. In other words, it can be said that the diagnostic data 33 is knowledge data obtained at the site. Here, one example of the diagnostic data 33 will be described with reference to FIG. 9.

FIG. 9 is a diagram illustrating one example of the diagnostic data according to the embodiment. As illustrated in FIG. 9, the diagnostic data 33 stores therein, in an associated manner, the device id, a diagnostic class a, a diagnostic class b, a ZZ voltage check, an LED power check, ... , and the like. The device id is the device id of the prediction target, and corresponds to the device id that is stored in each of the BOM data 11 and the defective phenomenon data 12. The diagnostic class a is one of the parts that is a target for a diagnosis. The diagnostic class b is the other of the parts that is a target for a diagnosis. Each of the ZZ voltage check and the LED power check is a diagnostic item of a diagnosis conducted by a worker at the site. Regarding each of the diagnostic items, an identifier indicating whether or not a diagnosis has been conducted is set. In a case where a diagnosis has been conducted, "o" is set as one example. In a case where a diagnosis has not been conducted, "×" is set as one example.

As one example, in a case where the device id is "10", a "memory" is stored as the diagnostic class a, a "CPU" is stored as the diagnostic class b, "o" is stored as the ZZ voltage check, and "×" is stored as the LED power check. In other words, it is indicated that, in a case in which a malfunction occurs in the device indicated by the device id of "10", the "ZZ voltage check" has been conducted in order to determine the "memory" and the "CPU" as the replacement part by the worker at the site, but the "LED power check" has not been conducted.

A description will be given here by referring back to FIG. 8. The linked data 34 is the information that associates the diagnostic item with the feature value. Here, one example of the linked data 34 will be described with reference to FIG. 10. FIG. 10 is a diagram illustrating one example of the linked data according to the embodiment. As illustrated in FIG. 10, the linked data 34 stores therein, the diagnostic item and the feature value in an associated manner. The diagnostic item is the name that indicates the diagnostic content that has been conducted by a worker at the site. The feature value is the name that indicates the diagnostic content that is used when the XAI 40 is trained.

As one example, in a case where the diagnostic item is the "ZZ voltage check", a "ZZ voltage" is stored as the feature value. In a case where the diagnostic item is the "LED power check", an "LED light level" is stored as the feature value.

A description will be given here by referring back to FIG. 8. The prediction error evaluation unit 31 evaluates the prediction error. For example, the prediction error evaluation unit 31 evaluates the prediction error of each of the two classes by utilizing both of the rule that has been trained by the XAI 40 and the prediction result data 21. For example, the prediction error evaluation unit 31 acquires a plurality of rules that have been trained by the rule based model indicated by the XAI 40. The prediction error evaluation unit 31 calculates the prediction error rate of the two classes for each rule by using the prediction result data 21. Then, the prediction error evaluation unit 31 specifies, on the basis of the calculation result, the two classes that corresponds to the rules in each of which an occurrence rate of the prediction error exceeds a predetermined value. The specified two classes are the two parts that are difficult to predict as the replacement parts. Furthermore, the predetermined value may be 0.5, or may be 0.7. The predetermined value is able to be changed as appropriate.

The additional feature value searching unit 32 searches for the feature value to be added by checking both of the two classes that has been specified by the prediction error evaluation unit 31 and in which a prediction error occurs frequently (difficult to predict) and the rule at that time against the diagnostic data 33. For example, the additional feature value searching unit 32 acquires the BOM data 11 that conforms to the specified rule and the diagnostic data 33 that corresponds to the BOM data 11. Then, the additional feature value searching unit 32 collects the diagnostic data 33 that includes the two classes that have been specified in the acquired diagnostic data 33. Then, the additional feature value searching unit 32 specifies, on the basis of the linked data 34, the feature value corresponding to the diagnostic item that has one or more "∘" included in the collected diagnostic data 33. Then, the additional feature value searching unit 32 estimates, by using the collected diagnostic data 33 and the prediction result data 21, a ratio by which prediction accuracy is able to be improved in a case where the specified feature value is added to the teacher data in learning. In other words, regarding one or more feature values that are additional candidates for an input to the BOM data 11 and that are specified on the basis of the linked data 34, the additional feature value searching unit 32 estimates a degree of improvement of the prediction accuracy in a case where the feature values are added to the teacher data included in the XAI 40 by using the collected diagnostic data 33.

Then, the additional feature value searching unit 32 outputs the estimated degree of improvement of the prediction accuracy together with the feature values that are the additional candidates, the two classes in which a prediction error occurs frequently, and the rule at that time. As a result of this, by estimating the degree of improvement of the prediction accuracy with respect to the feature values by using the diagnostic data 33, the additional feature value searching unit 32 is able to choose the feature value with a higher improvement effect of the prediction accuracy while checking the knowledge of the worker at the site.

Then, in a case where two or more feature values that are the additional candidates are output, the additional feature value searching unit 32 chooses, on the basis of the estimated degree of improvement of the prediction accuracy, from among the feature values that are the additional candidates, the feature value that is recommended to be added to the BOM data 11. As a result of this, the additional feature value searching unit 32 is able to improve the prediction accuracy of the XAI 40 by adding the chosen feature value to the BOM data 11.

### One example of prediction error evaluation

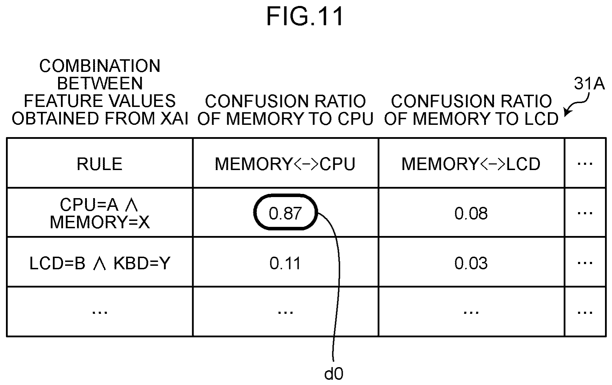

Here, one example of the prediction error evaluation performed by the prediction error evaluation unit 31 according to the embodiment will be described with reference to FIG. 11. FIG. 11 is a diagram illustrating one example of the prediction error evaluation according to the embodiment. In FIG. 11, a prediction error evaluation result 31A is illustrated. In the prediction error evaluation result 31A, a plurality of rules that are obtained by the XAI 40 are set. The plurality of rules is trained by the XAI 40 included in the learning unit 10. Each of the rules is represented by a combination of the respective feature values. For example, a single piece of rule is "CPU = A and also memory = X". The other rule is "LCD = B and also KBD = Y".

The prediction error evaluation unit 31 calculates, for each rule, a prediction error rate of the two classes by using the prediction result data 21. For example, the prediction error evaluation unit 31 acquires the record corresponding to the specific rule from the prediction result data 21. The prediction error evaluation unit 31 uses the correct answer of the acquired record and the part content of the prediction, and calculates a confusion ratio (prediction error rate) in the two classes. As one example, a case in which the two classes are the "CPU" and the "memory" will be described. The prediction error evaluation unit 31 calculates, from a record group corresponding to the specific rule, the number of records in which each of the pieces of part content of (the correct answer and the prediction) has a combination of (CPU, and CPU), a combination of (memory, and memory), a combination of (CPU, and memory), and a combination of (memory, and CPU), and defines the calculation result as A. In addition, the prediction error evaluation unit 31 calculates, from the record group corresponding to the same specific rule, the number of records in which each of the pieces of part content of (the correct answer and the prediction) has a combination of (CPU, and memory), and a combination of (memory, and CPU), and defines the calculation result as B. Then, the prediction error evaluation unit 31 is able to calculate the confusion ratio (prediction error rate) as B/A in a case where the two classes are the "CPU" and the "memory".

In this case, the confusion ratio in a case in which, for example, the rule is "CPU = A and also memory = X" and the two classes are the "memory" and the "CPU" is calculated as 0.87 (d0). In other words, under the condition of "CPU = A and also memory = X", a ratio of a case in which the replacement target predicted by the prediction unit 20 is the CPU instead of the memory to a case in which the replacement target predicted by the prediction unit 20 is the memory instead of the CPU is calculated as 0.87.

Similarly, a confusion ratio in a case where the rule is "CPU = A and also memory = X" and the two classes are the "memory" and the "LCD" is calculated as 0.08. Furthermore, a confusion ratio in a case where the rule is "LCD = B and also KBD = Y" and the two classes are the "memory" and the "CPU" is calculated as 0.11. Furthermore, a confusion ratio in a case where the rule is "LCD = B and also KBD = Y" and the two classes are the "memory" and the "LCD" is calculated as 0.03.

Then, the prediction error evaluation unit 31 specifies, on the basis of the calculation result, the two classes in which a prediction error occurs frequently and that corresponds to the rule. In other words, the prediction error evaluation unit 31 specifies the two classes that are difficult to be separated under the specific rule. In this case, under the rule of "CPU = A and also memory = X", in a case where the two classes are the "memory" and the "CPU", the confusion ratio becomes "0.87", which is the highest confusion ratio. As a result of this, a condition that "CPU = A and also memory = X" is specified as the rule, and a condition that the "memory" and the "CPU" are specified as the two classes. In other words, under the rule of "CPU = A and also memory = X", it is most difficult to determine whether the CPU or the memory is to be replaced.

### One example of additional feature value search

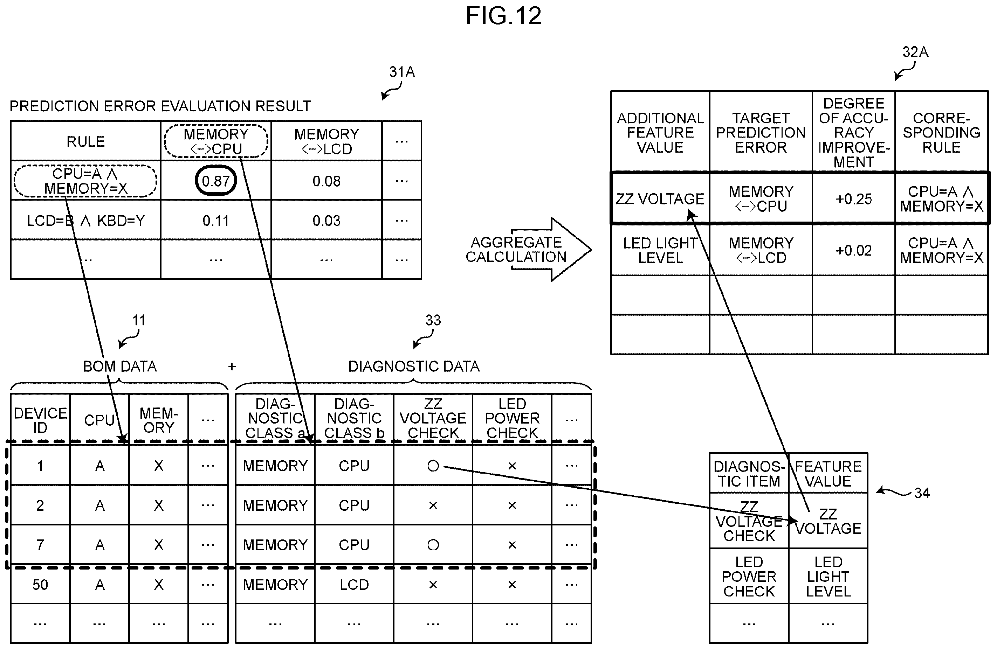

Here, one example of the additional feature value search conducted by the additional feature value searching unit 32 according to the embodiment will be described with reference to FIG. 12. FIG. 12 is a diagram illustrating one example of the additional feature value search according to the embodiment. Moreover, in FIG. 12, it is assumed that the prediction error evaluation unit 31 specifies, from the prediction error evaluation result 31A, under the rule of "CPU = A and also memory = X", the "CPU" and the "memory" as the two classes that are difficult to be separated.

As illustrated in FIG. 12, the additional feature value searching unit 32 collects the BOM data 11 that conforms to the specified rule and that is connected to the two specified classes and collects the diagnostic data 33 that corresponds to the BOM data 11. In this case, in the BOM data 11 and the diagnostic data 33, the BOM data 11 that conforms to the specified rule of "CPU = A and also memory = X" and that is connected to each of the predictions of the "CPU" and the "memory" included in the specified two classes is collected. In addition, the diagnostic data 33 corresponding to the collected BOM data 11 is collected. In the diagnostic data 33, an identifier indicating whether or not a diagnosis has been conducted is set, for each diagnostic item, by being associated with the two specified classes of the "CPU" and the "memory". In a case where a diagnosis has been conducted, "o" is set. In a case where a diagnosis has not been conducted, "×" is set.

Then, the additional feature value searching unit 32 specifies, on the basis of the linked data 34, the feature value corresponding to the diagnostic item that has one or more "∘" included in the collected diagnostic data 33. Then, the additional feature value searching unit 32 estimates, by using the collected diagnostic data 33, a ratio by which prediction accuracy is able to be improved in a case where the specified feature value is added to the teacher data in learning. In this case, the "ZZ voltage check" is present as the diagnostic item that has one or more "o" included in the collected diagnostic data 33. The "ZZ voltage check" is associated with the "ZZ voltage" on the basis of the linked data 34, and is then specified. Then, the additional feature value searching unit 32 calculates, by using the collected diagnostic data 33, a ratio by which prediction accuracy is able to be improved in a case where the specified feature value of the "ZZ voltage" is added to the teacher data in learning as "+0.25".

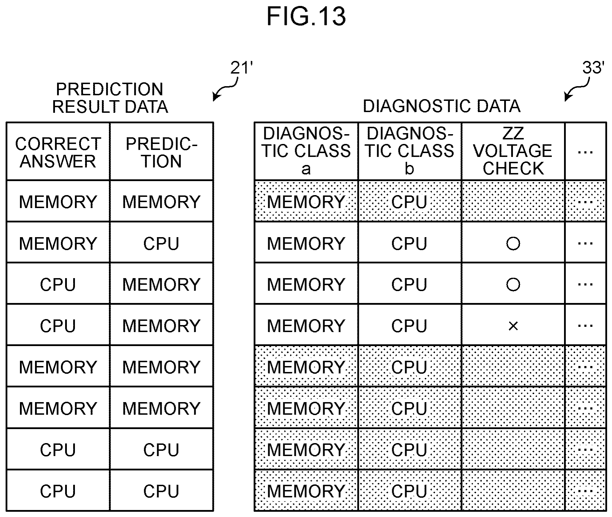

Here, one example of a calculation of a degree of accuracy improvement will be described with reference to FIG. 13. FIG. 13 is a diagram illustrating one example of the calculation of the degree of accuracy improvement according to the embodiment. It is assumed that the list indicated at the right part illustrated FIG. 13 is diagnostic data 33' that has been collected. It is assumed that the list indicated at the left part illustrated in FIG. 13 is prediction result data 21' that is associated with the collected diagnostic data 33. In other words, regarding the device in which a defective phenomenon has occurred, the prediction result data 21' obtained in a case where a prediction has been conducted by the XAI 40 is associated with the diagnostic data 33' obtained in a case where a diagnosis has been conducted at the site.

Under such circumstances, in the diagnostic data 33', eight pieces of data related to the "CPU" and the "memory" included in the specified two classes are present. In the prediction result data 21', three pieces of data each having different part content related to the combination of the correct answer and the prediction are present. Among these, two pieces of data out of these pieces of data, in the diagnostic data 33', a replacement part of the correct answer is able to be found by conducting a diagnosis of the ZZ voltage check by a worker at the site. As a result of this, as a result of the ZZ voltage being included in the AI model as an additional feature value, it is estimated that the prediction accuracy is improved by an amount corresponding to 2/8 (0.25). The value of "0.25" is the degree of accuracy improvement.

A description will be given here by referring back to FIG. 12. The additional feature value searching unit 32 outputs information 32A that includes the estimated degree of accuracy improvement, additional feature value, the two classes in which a prediction error occurs frequently, and the rule at that time. Then, the worker at the site refers to the output information 32A, and choose a feature value with a high accuracy improvement effect or a feature value with a low installation cost while checking whether or not the information 32A matches the worker's knowledge. The chosen feature value is acquired in the manufacturing phase. The feature value that has been acquired in the manufacturing phase is added to the BOM data 11. Then, the learning unit 10 trains the XAI 40 by using the BOM data 11 that includes the newly added feature value.

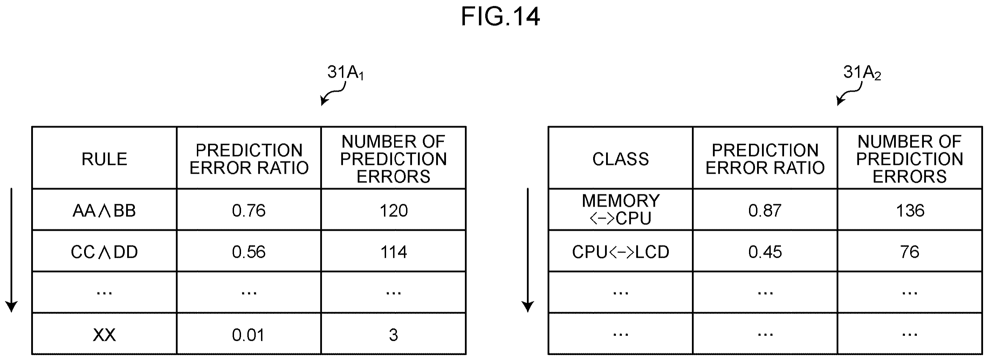

Here, a degree of priority of a feature value that is verified by the additional feature value searching unit 32 at the time of a choice of an additional feature value will be described with reference to FIG. 14. FIG. 14 is a diagram illustrating the degree of priority of the selection of a feature value. As illustrated in FIG. 14, in a case where many diagnostic items are included in the diagnostic data 33, it is possibly be difficult for the additional feature value searching unit 32 to verify the feature value corresponding to the diagnostic item.

In such a case, as one example, the additional feature value searching unit 32 may refer to a prediction error evaluation result 31A₁ indicated at the left part illustrated in FIG. 14, and may sequentially select a rule from among the plurality of rules in the order of decreasing ratio of the prediction error. The determination of whether the number of prediction errors is large or small mentioned here may be performed by using, as one example, an average value of the confusion ratio between a plurality of classes corresponding to the rule as the prediction error ratio. Furthermore, as another example, the number of confusions among the plurality of classes corresponding to the rule may be used as the number of prediction errors. Then, the additional feature value searching unit 32 may verify the feature value corresponding to the diagnostic item that is obtained from the selected rule. In other words, the additional feature value searching unit 32 may sequentially choose the diagnostic items having deep relationship in order from top of the rank of the rule, and may select an additional feature value.

Furthermore, as another example, the additional feature value searching unit 32 refers to a prediction error evaluation result 31A₂ indicated at the right part illustrated in FIG. 14, and may sequentially select a class in which a prediction error occurs frequently from among the plurality of classes. The determination of whether the number of prediction errors is large or small may be performed by using, as one example, a confusion ratio between the two classes. As still another example, the number of confused two classes may be used. Then, the additional feature value searching unit 32 may verify the feature value corresponding to the diagnostic item that is obtained from the selected two classes. In other words, the additional feature value searching unit 32 may sequentially choose the diagnostic items having deep relationship in order from top of rank of the two classes, and may select an additional feature value.

### Flowchart of prediction error evaluation process

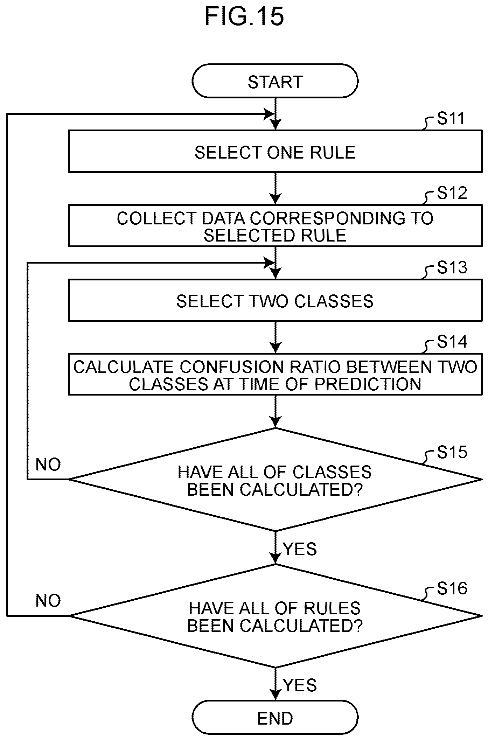

FIG. 15 is a diagram illustrating one example of the flowchart of a prediction error evaluation process according to the embodiment. Moreover, it is assumed that a plurality of rules have been acquired from the XAI 40.

As illustrated in FIG. 15, the prediction error evaluation unit 31 selects a single piece of rule from among the acquired plurality of rules (Step S11). Then, the prediction error evaluation unit 31 collects the pieces of data corresponding to the selected rule (Step S12). For example, the prediction error evaluation unit 31 collects the record corresponding to the selected rule from the prediction result data 21.

Then, the prediction error evaluation unit 31 selects the two classes (Step S13). Then, the prediction error evaluation unit 31 calculates the confusion ratio (prediction error rate) between the selected two classes at the time of the prediction (Step S14). For example, the prediction error evaluation unit 31 uses the correct answer of the collected records and each of the pieces of part content related to the prediction, and calculates the confusion ratio between the selected two classes.

Then, the prediction error evaluation unit 31 determines whether or not all of the classes have been calculated (Step S15). If it is determined that all of the classes have not been calculated (No at Step S15), the prediction error evaluation unit 31 proceeds to Step S13 in order to select the other two classes.

On the other hand, if it is determined that all of the classes have been calculated (Yes at Step S15), the prediction error evaluation unit 31 determines whether or not all of the rules have been calculated (Step S16). If it is determined that all of the rules have not been calculated (No at Step S16), the prediction error evaluation unit 31 proceeds to Step S11 in order to select a next rule.

On the other hand, if it is determined that all of the rules have been calculated (Yes at Step S16), the prediction error evaluation unit 31 holds the confusion ratio between the two classes calculated for each rule as the prediction error evaluation result 31A, and ends the prediction error evaluation process.

### Flowchart of additional feature value search process

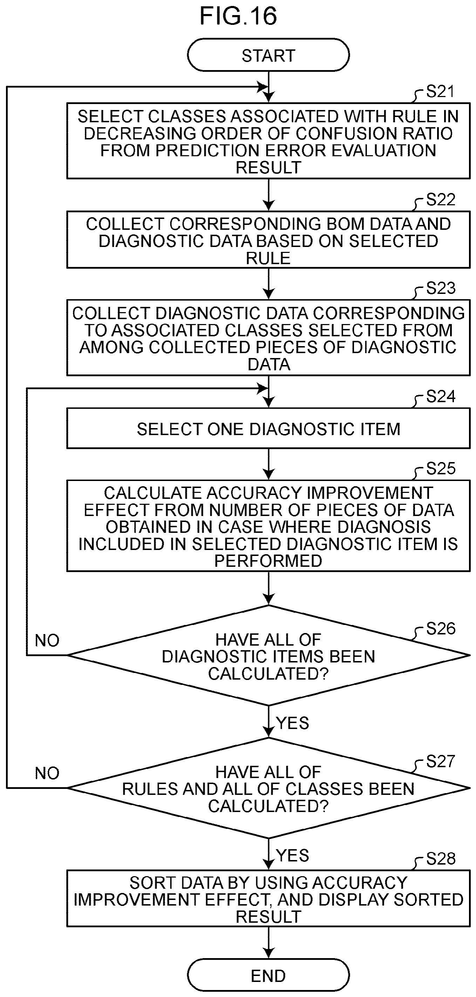

FIG. 16 is a diagram illustrating one example of the flowchart of an additional feature value search process according to the embodiment.

As illustrated in FIG. 16, the additional feature value searching unit 32 selects the classes (two classes) associated with the rule in decreasing order of confusion ratio from the prediction error evaluation result 31A (Step S21).

Then, the additional feature value searching unit 32 collects the corresponding BOM data 11 and the diagnostic data 33 on the basis of the selected rule (Step S22). Furthermore, the additional feature value searching unit 32 collects the diagnostic data 33 corresponding to the associated classes (two classes) that have been selected from among the collected pieces of diagnostic data 33 (Step S23).

Then, the additional feature value searching unit 32 selects a single piece of diagnostic item from the collected pieces of diagnostic data 33 (Step S24). For example, the additional feature value searching unit 32 selects the diagnostic item that has one or more "o" from the collected pieces of diagnostic data 33.

Then, the additional feature value searching unit 32 calculates an accuracy improvement effect from the number of pieces of data obtained in a case where a diagnosis included in the selected diagnostic item is conducted (Step S25). For example, the additional feature value searching unit 32 counts the number of pieces of the diagnostic data 33 having the collected two classes (X). In addition, regarding the prediction result data 21 that is associated with the diagnostic data 33 that is targeted for the count, the additional feature value searching unit 32 counts the number of pieces of data indicating that the diagnostic item of the diagnostic data 33 is "o" from among the pieces of data in which each of the part contents is different between the correct answer and the prediction (Y). Then, the additional feature value searching unit 32 determines that the result of the calculation of Y/X is the accuracy improvement effect.

Then, the additional feature value searching unit 32 determines whether or not all of the diagnostic items have been calculated (Step S26). If it is determined that all of the diagnostic items have not been calculated (No at Step S26), the additional feature value searching unit 32 proceeds to Step S24 in order to select a next diagnostic item.

On the other hand, if it is determined that all of the diagnostic items have been calculated (Yes at Step S26), the additional feature value searching unit 32 determines whether or not all of the rules and all of the classes have been calculated (Step S27). If it is determined that all of the rules and all of the classes have not been calculated (No at Step S27), the additional feature value searching unit 32 proceeds to Step S21 in order to select a next rule and the two classes.

On the other hand, if it is determined that all of the rules and all of the classes have been calculated (Yes at Step S27), the additional feature value searching unit 32 sorts all of the rules and all of the classes by using the accuracy improvement effect, and displays the sorted result (Step S28). Then, the additional feature value searching unit 32 ends the additional feature value search process.

As a result of this, in a case where the additional feature value searching unit 32 predicts the replacement part, the additional feature value searching unit 32 is able to choose the diagnostic item (feature value) that is needed to improve the accuracy of the prediction.

Incidentally, in the embodiment, the prediction error evaluation unit 31 evaluates the prediction error between the respective two classes by utilizing the rule that has been trained by the XAI 40 and the prediction result data 21. Then, the explanation has been given of a case in which the additional feature value searching unit 32 searches for the feature value to be added by checking both of the two classes that have been evaluated by the prediction error evaluation unit 31 that a prediction error occurs frequently (difficult to predict) and the rule at that time against the diagnostic data 33. However, the above described process performed by the prediction error evaluation unit 31 is on the basis of the XAI 40, but a case of machine learning in which the rule is not trained may also be adopted.

In a case where machine learning in which the rule is not trained is adopted, the prediction error evaluation unit 31 utilizes the prediction result data 21, and evaluates the prediction error for each of the two classes. For example, the prediction error evaluation unit 31 sequentially select the two classes from the prediction result data 21. Then, the prediction error evaluation unit 31 uses the prediction result data 21, and calculates the prediction error rate of the two classes. Then, the prediction error evaluation unit 31 specifies, on the basis of the calculation result, the two classes in which the occurrence rate of the prediction error exceeds the predetermined value. The predetermined value may be 0.5, or may be 0.7. The predetermined value may be changed as appropriate.

The additional feature value searching unit 32 searches for the feature value to be added by checking both of the two classes that has been specified by the prediction error evaluation unit 31 and in which a prediction error occurs frequently (difficult to predict) and the rule at that time against the diagnostic data 33. For example, the additional feature value searching unit 32 collects both of the diagnostic data 33 that conforms to the specified two classes and the BOM data 11 that corresponds to the diagnostic data 33. Then, the additional feature value searching unit 32 specifies, on the basis of the linked data 34, the feature value corresponding to the diagnostic item that has one or more "o" included in the collected diagnostic data 33. Then, the additional feature value searching unit 32 estimates, by using the collected pieces of the diagnostic data 33 and the prediction result data 21, a ratio by which prediction accuracy is able to be improved in a case where the specified feature value is added to the teacher data in learning. In other words, regarding one or more feature values that are additional candidates for an input to the BOM data 11 and that are specified on the basis of the linked data 34, the additional feature value searching unit 32 estimates a degree of improvement of the prediction accuracy in a case where the feature values are added to the teacher data included in the XAI 40 by using the collected diagnostic data 33.

Then, the additional feature value searching unit 32 outputs the estimated degree of improvement of the prediction accuracy together with the feature value that are the additional candidate, and the two classes in which a prediction error occurs frequently. In addition, the additional feature value searching unit 32 may display an amount of statistic of the part in which a prediction is likely to be improved by using the prediction result data 21 that is associated with the diagnostic data 33 and that conforms to the two classes.

### Modification of additional feature value search

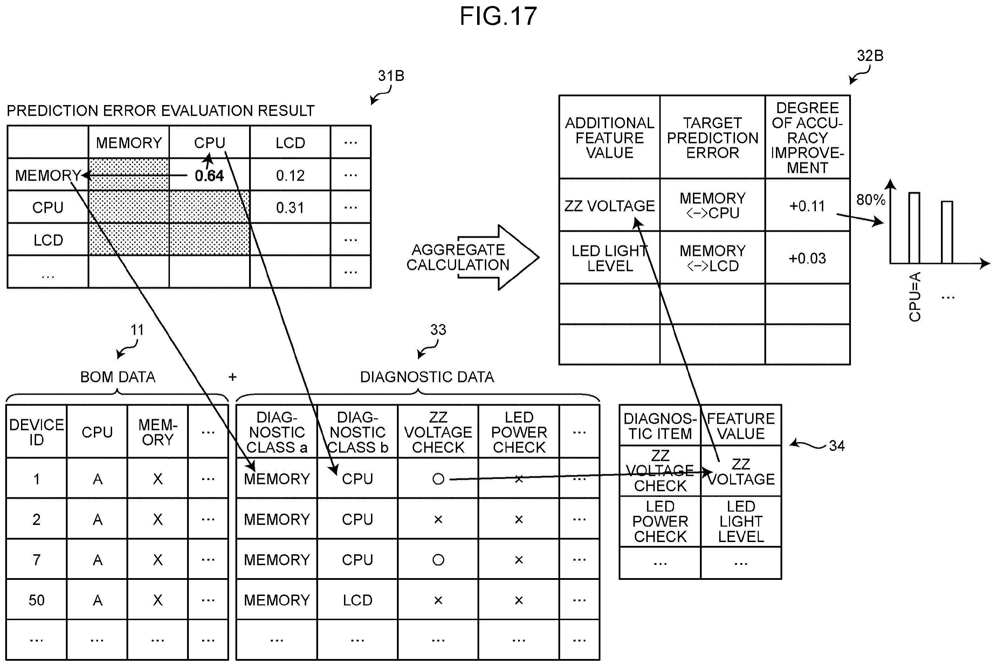

FIG. 17 is a diagram illustrating a modification of the additional feature value search according to the embodiment. Moreover, in FIG. 17, it is assumed that the prediction error evaluation unit 31 specifies, from a prediction error evaluation result 31B, the "CPU" and the "memory" as the two classes that are difficult to be separated.

As illustrated in FIG. 17, the additional feature value searching unit 32 collects both of the diagnostic data 33 that conforms to the specified two classes and the BOM data 11 that is associated with the diagnostic data 33. In this case, in the diagnostic data 33, pieces of the diagnostic data 33 that conform to the "CPU" and the "memory" corresponding to the specified two classes are collected. Furthermore, in the BOM data 11, pieces of the BOM data 11 corresponding to the collected pieces of the diagnostic data 33 are collected. In the diagnostic data 33, an identifier indicating whether or not a diagnosis has been conducted is set, for each diagnostic item, by being associated with the "CPU" and the "memory" corresponding to the specified two classes. In a case where a diagnosis has been conducted, "o" is set. In a case where a diagnosis has not been conducted, "×" is set. Moreover, the diagnostic data 33 to be collected and the BOM data 11 are not collected by using the rule, so that all of the pieces of data conforming to the "CPU" and the "memory" corresponding to the two classes are collected.

Then, the additional feature value searching unit 32 specifies, on the basis of the linked data 34, the feature value corresponding to the diagnostic item that has one or more "∘" included in the collected diagnostic data 33. Then, the additional feature value searching unit 32 estimates, by using the collected diagnostic data 33, a ratio by which prediction accuracy is able to be improved in a case where the specified feature value is added to the teacher data in learning. In this case, the "ZZ voltage check" is present as the diagnostic item that has one or more "o" included in the collected diagnostic data 33. The "ZZ voltage check" is associated with the "ZZ voltage" on the basis of the linked data 34, and is then specified. Then, the additional feature value searching unit 32 calculates, by using the collected diagnostic data 33, a ratio by which prediction accuracy is able to be improved in a case where the specified feature value of the "ZZ voltage" is added to the teacher data in learning as "+0.11". A calculation method of calculating the ratio in which the prediction accuracy is able to be improved may be the same method as the method described above in FIG. 13.

Then, the additional feature value searching unit 32 outputs information 32B that includes the estimated degree of accuracy improvement, the additional feature value, and the two classes in which a prediction error occurs frequently. In addition, the additional feature value searching unit 32 displays an amount of statistic of the part in which a prediction is likely to be improved by using the prediction result data 21 that corresponds to the diagnostic data 33 and that conforms to the two classes. In this case, for example, 80% of a product group that includes the CPU indicated by "A" is present included in the product group in which the prediction accuracy is able to be improved. In other words, it can be said that there was an 80% of a prediction error in the product group that includes the CPU indicated by "A" included in the product group in which the prediction accuracy is able to be improved.

Then, a worker at the site refers to the output information 32B, and chooses a feature value with a high accuracy improvement effect or a feature value with a low installation cost while checking whether or not the output information 32B matches the knowledge. The chosen feature value is acquired in the manufacturing phase. The feature value that has been acquired in the manufacturing phase is added to the BOM data 11. Then, the learning unit 10 trains the learning model for the machine learning in which the rule is not trained by using the BOM data 11 that includes the newly added feature value.

As a result of this, in a case where the additional feature value searching unit 32 predicts the replacement part, even in a case where the machine learning in which the rule is not trained is applied, it is possible to choose the diagnostic item (feature value) that is needed to improve the accuracy of the prediction.

### Effects of embodiment

According to the above described embodiment, the information processing apparatus 1 specifies, from a prediction result obtained from the prediction model that predicts a replacement part, two parts with an occurrence rate of a prediction error, which indicates that the other of the parts is determined to be the prediction result in a case where one of the parts is a correct answer, exceeding a predetermined value. The information processing apparatus 1 acquires both of the BOM data 11 that is connected to the specified two parts in each of which the prediction error has occurred and the diagnostic data 33 that corresponds to the BOM data 11 and that indicates the diagnostic content obtained by a worker. The information processing apparatus 1 estimates, by using the diagnostic data 33, regarding one or more feature values that are additional candidates for an input to the BOM data 11 and that are specified on the basis of the association relationship between the feature values and the diagnostic content that is included in the diagnostic data 33, the degree of improvement of the prediction accuracy to be indicated in a case where the feature values are added to the teacher data included in the prediction model. With this configuration, the information processing apparatus 1 is able to choose the feature value that improves the prediction accuracy of the prediction model that predict a replacement part.

Furthermore, according to the above described embodiment, the information processing apparatus 1 decides the feature value that is recommended to be added to the BOM data 11, on the basis of the estimated degree of improvement of the prediction accuracy, from among one or more of the feature values that are the additional candidates. With this configuration, the information processing apparatus 1 is able to improve the prediction accuracy of the prediction model by adding the decided feature values to the BOM data 11.

Furthermore, according to the above described embodiment, the information processing apparatus 1 counts a first record count that indicates a record count of the diagnostic data 33 corresponding to the two parts of the prediction error. The information processing apparatus 1 extracts the diagnostic data 33 corresponding to the prediction result in which the prediction and the correct answer are different from among the prediction results corresponding to the diagnostic data 33, and counts a second record count that indicates the record count of the diagnostic data 33 that includes the diagnostic content of a conducted diagnosis among extracted pieces of the diagnostic data 33. The information processing apparatus 1 estimates the value that is calculated by using the first record count and the second record count as the degree of improvement of the prediction accuracy related to the feature value corresponding to the diagnostic content. With this configuration, the information processing apparatus 1 is able to choose the additional feature value while taking into consideration the knowledge of a worker at the site by calculating the degree of improvement of the prediction accuracy by using the diagnostic data 33 in which the diagnostic item has been diagnosed by the worker.

Furthermore, according to the above described embodiment, the information processing apparatus 1 specifies, by using the prediction result and a rule that indicates the result obtained by training a combination of the feature values performed by the prediction model, the two parts and the rule in each of which the occurrence rate of the prediction error exceeds the predetermined value. The information processing apparatus 1 acquires both of the BOM data 11 that corresponds to the specified rule and the diagnostic data 33 that is connected to the specified two parts and that corresponds to the BOM data 11. Then, the information processing apparatus 1 estimates, by using the acquired diagnostic data 33, the degree of improvement of the prediction accuracy related to the feature value that is the additional candidate for an input to the BOM data 11. With this configuration, by using the rule that is obtained by the prediction model, the information processing apparatus 1 is able to estimate the degree of improvement of the prediction accuracy related to the feature value that is the additional candidate with high accuracy. As a result of this, the information processing apparatus 1 is able to more reliably choose the feature value that improves the prediction accuracy of the prediction model.

### Others

Moreover, in the embodiment described above, it has been described that the learning unit 10, the prediction unit 20, and the estimation unit 30 are installed in the information processing apparatus 1. However, the learning unit 10, the prediction unit 20, and the estimation unit 30 may be installed in each of the information processing apparatuses instead of being installed in a single unit of the information processing apparatus 1. Furthermore, the learning unit 10 may be installed in the information processing apparatus 1, whereas the prediction unit 20 and the estimation unit 30 may be installed in another information processing apparatus.

Furthermore, in the above described embodiment, the components of each of the units included in the information processing apparatus 1 illustrated in the drawings are not always physically configured as illustrated in the drawings. In other words, the specific mode of a separate or integrated device included in the information processing apparatus 1 is not limited to the drawings. Specifically, all or part of the unit may be configured by functionally or physically separating or integrating any of the units depending on various loads or use conditions. Furthermore, the storage unit that stores therein data, such as the diagnostic data 33, may be connected via a network as an external device that is provided an outside of the information processing apparatus 1.

Furthermore, all or any part of each of the processing functions performed in the information processing apparatus 1 illustrated in FIG. 1 can be implemented by a CPU and by programs analyzed and executed by the CPU or implemented as hardware by wired logic.

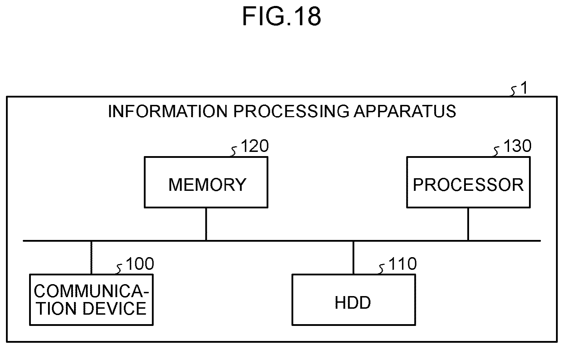

FIG. 18 is a diagram for explaining an example of a hardware configuration. As illustrated in FIG. 18, the information processing apparatus 1 includes a communication device 100, a Hard Disk Drive (HDD) 110, a memory 120, and a processor 130. Furthermore, each of the units illustrated in FIG. 18 is connected each other via a bus or the like.

The communication device 100 is a network interface card or the like, and communicates with another device. The HDD 110 stores therein programs or the DB that operates the function illustrated in FIG. 1.

The processor 130 has a cache memory installed, and operates the process that executes each of the functions described above in FIG. 1 or the like by reading the programs that execute the same process as that performed by each of the processing units illustrated in FIG. 1 from the HDD 110 or the like and loading the read programs into the memory 120. For example, the process executes the same function as that performed by each of the processing units included in the information processing apparatus 1. Specifically, the processor 130 reads, from the HDD 110 or the like, the programs having the same function as that performed by the learning unit 10, the prediction unit 20, the estimation unit 30, and the like. Then, the processor 130 executes the process for executing the same processes as those performed by the learning unit 10, the prediction unit 20, the estimation unit 30, and the like.

In this way, the information processing apparatus 1 operates as an apparatus that performs information processing by reading and executing the programs. Furthermore, the information processing apparatus 1 is also able to implement the same function as that described above in the embodiment by reading the programs from a recording medium by a medium recording device and executing the read programs. Furthermore, the programs described in another embodiment are not limited to be executed by the information processing apparatus 1. For example, the present invention may also be similarly used in a case in which another computer or a server executes a program or in a case in which another computer and a server cooperatively execute the program with each other.

The programs are able to be distributed via a network, such as the Internet. Furthermore, the programs are able to be read by a computer readable medium, such as a hard disk, a flexible disk (FD), a CD-ROM, a magnetooptical disk (MO), a digital versatile disk (DVD), or the like, and read the programs from the recording medium by the computer.

Furthermore, the information processing apparatus 1 that has been described above in the embodiment may be applied to a case of a choice of a replacement part in which a malfunction occurs in a manufacturing process of products of, for example, not only computers but also vehicles and the like.

### Reference Signs List

- 1: information processing apparatus

- 10: learning unit
- 11: BOM data
- 12: defective phenomenon data
- 13: repair handling data
- 20: prediction unit
- 21: prediction result data
- 30: estimation unit
- 31: prediction error evaluation unit
- 32: additional feature value searching unit
- 33: diagnostic data
- 34: linked data
- 40: XAI

## Claims

1. An estimation program causing a computer to execute a process comprising:
specifying, from a prediction result obtained from a prediction model that predicts a replacement part, two parts with an occurrence rate of a prediction error, which indicates that another of the parts is determined to be the prediction result in a case where one of the parts is a correct answer, exceeding a predetermined value;
acquiring both of input data that is connected to the specified two parts and diagnostic data that indicates diagnostic content obtained by a worker and that corresponds to the input data; and
estimating, by using the diagnostic data, regarding one or more feature values that are additional candidates for an input to the input data and that are specified based on an association relationship between the feature values and the diagnostic content that is included in the diagnostic data, a degree of improvement of prediction accuracy to be indicated in a case where the feature values are added to teacher data included in the prediction model.

2. The estimation program according to claim 1, wherein the process further includes deciding the feature value that is recommended to be added to the input data, based on the estimated degree of improvement of the prediction accuracy, from among one or more of the feature values that are the additional candidates.

3. The estimation program according to claim 1, wherein
the estimating includes:
counting a first record count that indicates a record count of the diagnostic data corresponding to the two parts of the prediction error;
extracting the diagnostic data corresponding to the prediction result in which a prediction and the correct answer are different from among the prediction results corresponding to the diagnostic data;
counting a second record count that indicates the record count of the diagnostic data that includes the diagnostic content of a conducted diagnosis among the pieces of extracted diagnostic data; and
estimating a value that is calculated by using the first record count and the second record count as the degree of improvement of the prediction accuracy related to the feature value corresponding to the diagnostic content.

4. The estimation program according to claim 1, wherein
the specifying includes specifying, by using the prediction result and a rule that indicates a result obtained by training a combination of the feature values performed by the prediction model, the two parts and the rule in each of which the occurrence rate of the prediction error exceeds the predetermined value,
the acquiring includes acquiring both of the input data that corresponds to the specified rule and the diagnostic data that is connected to the specified two parts and that corresponds to the input data, and
the estimating includes estimating, by using the acquired diagnostic data, the degree of improvement of the prediction accuracy related to the feature value that is the additional candidate for an input to the input data.

5. An information processing apparatus including a control unit configured to execute a process comprising:
specifying, from a prediction result obtained from a prediction model that predicts a replacement part, two parts with an occurrence rate of a prediction error, which indicates that another of the parts is determined to be the prediction result in a case where one of the parts is a correct answer, exceeding a predetermined value;
acquiring both of input data that is connected to the specified two parts and diagnostic data that indicates diagnostic content obtained by a worker and that corresponds to the input data; and
estimating, by using the diagnostic data, regarding one or more feature values that are additional candidates for an input to the input data and that are specified based on an association relationship between the feature values and the diagnostic content that is included in the diagnostic data, a degree of improvement of prediction accuracy to be indicated in a case where the feature values are added to teacher data included in the prediction model.

6. An estimation method carried out by a computer, comprising:
specifying, from a prediction result obtained from a prediction model that predicts a replacement part, two parts with an occurrence rate of a prediction error, which indicates that another of the parts is determined to be the prediction result in a case where one of the parts is a correct answer, exceeding a predetermined value;
acquiring both of input data that is connected to the specified two parts and diagnostic data that indicates diagnostic content obtained by a worker and that corresponds to the input data; and
estimating, by using the diagnostic data, regarding one or more feature values that are additional candidates for an input to the input data and that are specified based on an association relationship between the feature values and the diagnostic content that is included in the diagnostic data, a degree of improvement of prediction accuracy to be indicated in a case where the feature values are added to teacher data included in the prediction model.
